# EUROPEAN PATENT APPLICATION

(11) **EP 4 428 794 A1**
(43) Date of publication of application: **11.09.2024**
(21) Application number: 23160870.4
(22) Date of filing: 09.03.2023
(51) Int. Cl.: G06Q 30/0241

(54) **METHOD OF CUSTOMIZING AN ADVERTISEMENT**

(71) Applicant: Top Victory Investments Limited, Kwun Tong, Kowloon 999077 (HK)
(72) Inventor: JAIN, Vikas, 560045 Bangalore (IN)
(74) Representative: Page White Farrer

(57) **Abstract**

A method of customizing an advertisement includes displaying an advertisement that contains an area (31) to be filled with an image, capturing a face image of a viewer who is looking at a display unit (11), performing a matching algorithm to determine whether the face image is suitable for filling the area (31) in the advertisement, controlling the display unit (11) to show the face image and a message that requests for consent of the viewer to using the face image in the advertisement, filling the area (31) in the advertisement with the face image to obtain a customized advertisement, and displaying the customized advertisement.

## Description

The disclosure relates to a method of customizing an advertisement, and more particularly to a method of customizing an advertisement using a viewer's face image.

Advertisements are provided in public places to promote products, services or brands. Electronic devices such as display screens are used to display static and/or dynamic advertisements in public transit stations, stadiums or shopping malls or districts. However, people are often reluctant to spend time watching advertisements since the advertisements may be unappealing or there may be no way to reward viewers. On the other hand, advertisers are not sure whether their advertisements are being watched or whether people are willing to associate themselves with such advertisements.

Advertisers are trying to find a way that is interactive in nature to connect their advertisements to the pubic using technologies such as cameras and artificial intelligence (Al). For example, a viewer's face image that is suitable for being presented in an advertisement may be used to replace a face originally contained in the advertisement to arouse people's interest. Therefore, an object of the disclosure is to provide a method of customizing an advertisement that has an interactive effect so as to relate the advertisement to ordinary people, and that can alleviate at least one of the drawbacks of the prior art.

According to an aspect of the disclosure, there is provided a method of customizing an advertisement according to claim 1.

Other features and advantages of the disclosure will become apparent in the following detailed description of the embodiment(s) with reference to the accompanying drawings. It is noted that various features may not be drawn to scale.
Figure 1 is a block diagram illustrating an embodiment of an electronic device according to the disclosure.
Figure 2 is a flow chart illustrating an embodiment of a method customizing an advertisement according to the disclosure.
Figure 3 is a schematic diagram illustrating an embodiment of an advertisement that contains an area to be filled with an image according to the disclosure.
Figure 4 is a schematic diagram illustrating an embodiment of a face image and a message that requests for consent according to the disclosure.
Figure 5 is a schematic diagram illustrating an embodiment of a customized advertisement according to the disclosure.
Figure 6 illustrates a step that is a modification of step S26 of Figure 2.
Figure 7 illustrates a step that is another modification of step S26 of Figure 2.
Figure 8 is a schematic diagram illustrating an embodiment of a customized advertisement according to the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

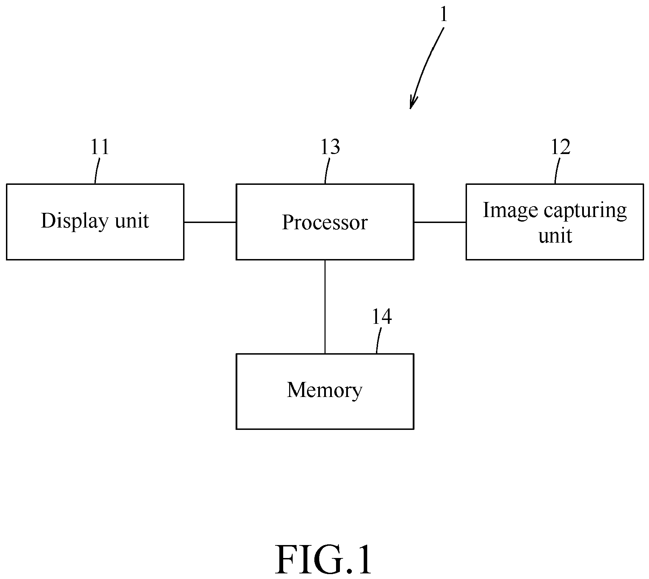

Referring to Figure 1, an electronic device 1 adapted to customize an advertisement according to an embodiment of the disclosure is illustrated. The electronic device 1 includes a display unit 11, an image capturing unit 12, a processor 13 and a memory 14. In some embodiments, the display unit 11 is implemented by an electronic visual display, a screen, a television, a computer monitor, a mobile display, a digital signage, a video wall, or the like; the image capturing unit 12 is implemented by a digital camera, a digital video recorder, or the like; the processor 13 is implemented by a central processing unit (CPU), a microprocessor, a mobile processor, a micro control unit (MCU), a digital signal processor (DSP), a field-programmable gate array (FPGA), or any circuit configurable/programmable in a software manner and/or hardware manner to implement functionalities described in this disclosure; the memory 14 is implemented by flash memory, a hard disk drive (HDD), a solid state disk (SSD), an electrically-erasable programmable read-only memory (EEPROM) or any other non-volatile memory devices. The electronic device 1 is located in a public place, such as a restaurant, a hotel, a stadium, a sports arena, a shopping mall, a shopping district, a theater, a park, a tourist spot, a government building, or the like. However, the location of the electronic device 1 is not limited to the aforementioned public places, and the electronic device 1 may be used in a household scenario as well.

The display unit 11 is configured to display an advertisement that contains an area to be filled with an image. In some embodiments, the advertisement is stored in the memory 14, and is generated in advance by modifying an existing advertisement, which has been displayed in public, in such a manner that a face of a figure in the existing advertisement is erased to show a blank face which serves as the area to be filled with an image. In some embodiments, the advertisement may be made to originally contain the area (e.g., a blank face or a placeholder) that is to be filled with an image, and may be provided to the electronic device 1 for storage in the memory 14.

The image capturing unit 12 is configured to capture images of one or more people in a field of view of the image capturing unit 12. The processor 13 is configured to analyze the images captured by the image capturing unit 12 so as to determine whether any of the one or more people is looking at the display unit 11. When it is determined by the processor 13 that at least one person among the one or more people is looking at the display unit 11 (referred to as a "viewer" hereinafter), the processor 13 extracts a face image of the viewer from the images, and performs a matching algorithm by applying artificial intelligence (Al) algorithms to determine whether the face image is suitable for filling the area (e.g., the blank face) in the advertisement. In some embodiments, when it is determined by the processor 13 that multiple people are looking at the display unit 11 (i.e., there are multiple viewers), the processor 13 extracts a plurality of face images of the respective viewers from the images, and performs the matching algorithm to determine which one among the face images is the most suitable for filling the area, if any of them is determined to be suitable for filing the area.

The processor 13 is further configured to, after determining that the face image of the viewer is suitable for filling the area, control the display unit 11 to show the face image and a message that requests for consent of the viewer to using the face image in the advertisement. In some embodiments, the message may prompt the viewer to make a specific gesture, such as thumbs up, to give consent to using the face image. In some embodiments, the face image and the message are shown beside the advertisement on the display unit 11. In some embodiments where the electronic device 1 further includes an audio output unit (not shown), such as a loudspeaker, the message that asks for consent of the viewer for the use of the face image may be a voice message and may be outputted by the voice output unit.

Afterward, the image capturing unit 12 is further configured to capture an image of the viewer, and the processor 13 is further configured to analyze the same image to determine whether the viewer is making the specific gesture. When it is determined that the viewer is making the specific gesture, which means that the viewer consents to the use of the face image in the advertisement, the processor 13 fills the area in the advertisement with the face image to result in a customized advertisement, and controls the display unit 11 to show the customized advertisement so that the viewer and/or the public can see the customized advertisement. In some embodiments, the processor 13 is further configured to modify the face image by adding an object to the face image, and to fill the area in the advertisement with the face image thus modified to result in the customized advertisement. For example, the face image may be modified as an image of the viewer's face as if the viewer was wearing a headgear, a mustache or a beard. In alternative embodiments, after the customized advertisement is generated, the processor 13 may modify the customized advertisement by adding an object to the face image that has filled the area.

In some embodiments, in order to reward the viewer who has given consent for the use of the face image in the advertisement, the processor 13 is further configured to control the display unit 11 to provide a unique code to the viewer that can be used to obtain a reward (e.g., a discount on the product being advertised). The unique code may be implemented by a barcode, such as a two-dimensional code, displayed on the display unit 11 to be scanned by a user device, such as a smartphone, of the viewer to allow the viewer to obtain the reward. For example, the viewer may operate his/her smartphone to use a camera to scan a quick response (QR) code displayed on the display unit 11, and browser software is then launched to direct the viewer to a website where the viewer can find tempting offers, rewards, or discounts related to the product or brand being advertised. In some embodiments, the unique code may be a human readable text that can be recorded and redeemed by the viewer to obtain the reward.

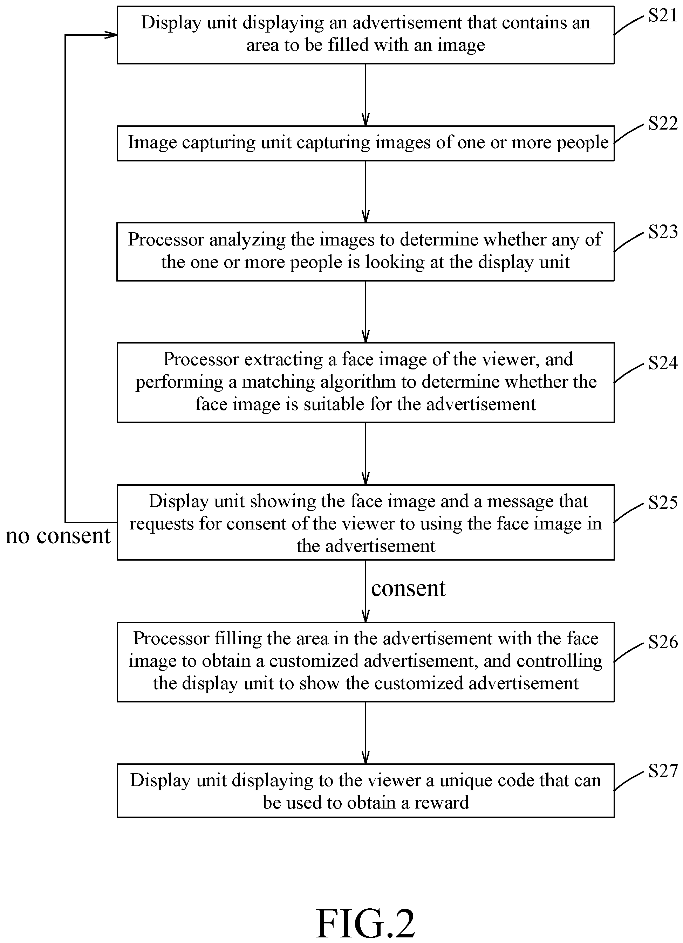

Referring to Figure 2, a method of customizing an advertisement according to an embodiment of the disclosure is illustrated. The method is adapted to be performed by the electronic device 1 shown in Figure 1 and introduced above. The method includes following steps S21 to S27.

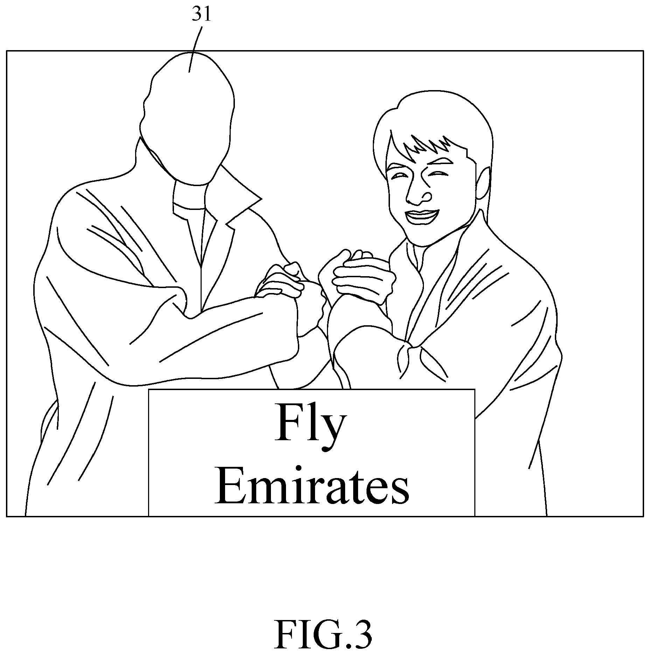

In step S21, the processor 13 controls the display unit 11 to display an advertisement that is stored in the memory 14 and that contains an area 31 to be filled with an image (see Figure 3).

In step S22, the processor 13 controls the image capturing unit 12 to capture images of one or more people in the field of view of the image capturing unit 12.

In step S23, the processor 13 analyzes the images captured by the image capturing unit 12 to determine whether any of the one or more people is looking at the display unit 11. In this step, the processor 13 first detects faces in the images using a frontal face detector that is included in the Dlib library software or using a convolutional neural network (CNN) model that is trained in advance, then detects key facial landmarks on the faces by performing facial landmark detection so as to locate salient regions of each of the faces, such as the eyes, the eyebrows, the nose, the mouth and the jawline, and next detects the eyes based on the key facial landmarks by using an eye detection technique so as to determine whether there is eye contact with the display unit 11. Regarding the facial landmark detection, with respect to each of the images, the face is localized in the image (i.e., to find the region of interest, ROI) using histogram of oriented gradient (HOG) and a linear support vector machine (SVM) object detector, and key facial landmarks on the face are then detected using a facial landmark detector that is included in the Dlib software library and that is an implementation of the paper V. Kazemi and J. Sullivan, "One Millisecond Face Alignment with an Ensemble of Regression Trees," 2014 IEEE Conference on Computer Vision and Pattern Recognition, 2014, pp. 1867-1874, doi: 10.1109/CVPR.2014.241. Regarding the eye detection technique, with respect to each of the images, the eyes are segmented out from the face by creating a mask to cover the face other than a portion surrounded by the facial landmarks related to the eyes, the eyeballs in the eyes are then segmented out through a thresholding process that creates a binary mask, and boundary points and/or center points of the eyeballs are finally found by using functions included in the open source computer vision (OpenCV) library, such as "findContours()", "cv2.contourArea" and/or "cv2.moments" so as to realize eye tracking. In this way, the processor 13 is able to determine whether any of the one or more people is looking at the display unit 11 (i.e., whether there is a viewer).

In step S24, when it is determined that there is a viewer, the processor 13 extracts a face image of the face from the image of the viewer. In a scenario where there are multiple viewers, the processor 13 extracts multiple face images of the faces from the images of the viewers. Subsequently, the processor 13 performs a matching algorithm to determine whether the face image is suitable for filling the area 31 in the advertisement. In the matching algorithm, the processor 13 determines whether the face image meets criteria that are set in advance for the advertisement to be customized. For example, the criteria of an advertisement may be related to one of an age, a gender, a style, an emotion, and any combination thereof. In one instance, the criteria may be set to be male, around forty years old, having a mustache, wearing eyeglasses, and/or being in a good mood (happy emotion). Items in the criteria may be combined based on the advertiser's needs by using logical Boolean operators. The processor 13 then detects criteria-related features, such as the gender (male or female), the age (e.g., whether around 40 years of age), the style (e.g., whether having a mustache or a beard, or whether wearing something on or around the face) and the emotion (e.g., happy, angry or calm) of the viewer in the face image. The processor 13 next calculates an overall score for the criteria-related features thus detected, and compares the overall score with a threshold value so as to decide whether the face image meets the criteria. For example, 25 points are given for the gender of female being detected, 5 points are given for the style of wearing a mask being detected, 10 points are given for the emotion of happy being detected, and the overall score of 35 points is calculated for these criteria-related features detected in a face image. When it is determined by the processor 13 that the overall score is higher than the threshold value, the face image is determined to be suitable for filling the area 31 in the advertisement. In some embodiments, the processor 13 may give weights to the criteria-related features thus detected when calculating the overall score. In the scenario where there are multiple viewers, and a plurality of face images of the respective viewers are extracted from the images, the processor 13 performs the matching algorithm to find which one among the face images is the most suitable for filling the area 31. Specifically, the processor 13 calculates, with respect to each of the face images, an overall score for the criteria-related features detected in the face image, and finds the highest one from among those of the overall scores of the face images that are higher than the threshold value. In this way, the face image that corresponds to the highest overall score is determined to be the most suitable for filling the area 31 in the advertisement.

In some embodiments, regarding how to detect the aforementioned criteria-related features in the face image, Keras library in python programming language is used to build a CNN model for age and gender detection, a CNN model is built based on the TensorFlow framework in Python programming language for face mask detection, Haar Feature-based Cascade Classifiers and relevant machine learning algorithms available in the OpenCV library are used for eyeglasses detection, a CNN model built using Keras library and the Haar Feature-based Cascade Classifiers are used for beard detection, a deep learning model for facial expression recognition available in a Python toolkit, EmoPy, is used for emotion detection. The memory 14 may store the aforementioned models and classifiers for use by the processor 13.

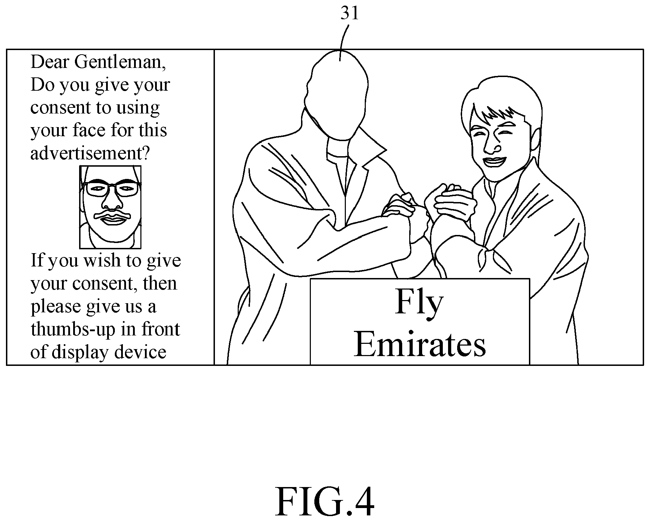

In step S25, after determining that the face image is suitable for filling the area 31 in the advertisement (or after determining one of the face images that is the most suitable for filling the area 31), the processor 13 controls the display unit 11 to show the face image and a message that requests for consent of the viewer to using the face image in the advertisement (see Figure 4). For example, the processor 13 controls the display unit 11 to show a face image of a viewer, and a message that prompts the viewer to make a specific gesture, such as thumbs up, to give consent to using his/her face image. Subsequently, the processor 13 controls the image capturing unit 12 to capture an image of the viewer, and analyzes the image thus captured to determine whether the viewer is making the specific gesture to give the consent. In some embodiments, the OpenCV library in Python programming language and the TensorFlow framework are used to build a model for hand gesture recognition. Since implementation of the hand gesture recognition has been known by persons having ordinary skill in the relevant art, details thereof are omitted herein for the sake of brevity.

When it is determined that the viewer does not give consent within a preset period, e.g., 30 seconds, the processor 13 removes the face image of the viewer, and the flow of the method goes back to step S21, that is, the display unit 11 again displays the advertisement with the area 31 yet to be filled . The processor 13 then controls the image capturing unit 12 to scan for other faces (i.e., steps S22 to S24).

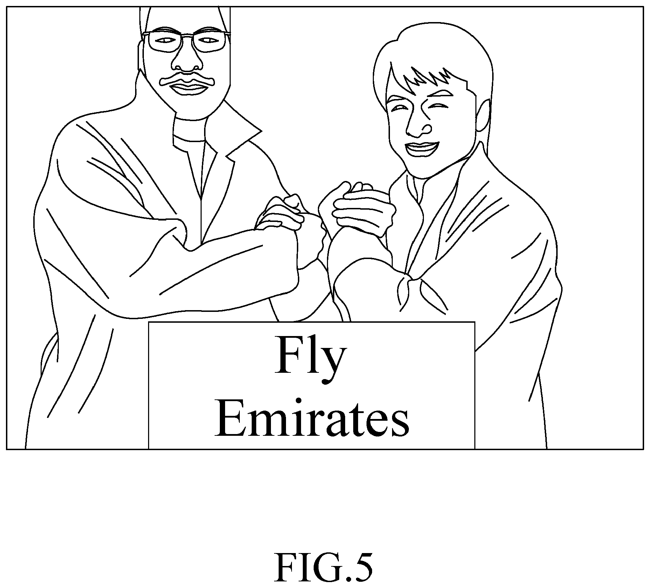

In step S26, after determining that the viewer is making the specific gesture to give the consent, the processor 13 fills the area 31 in the advertisement with the face image to obtain a customized advertisement (see Figure 5), and controls the display unit 11 to show the customized advertisement so that the viewer and/or the public can see the customized advertisement. In some embodiments, the processor 13 may directly overlay the area 31 in the advertisement with the face image to result in the customized advertisement. In some embodiments, the processor 13 swaps the area 31 with the face image by using the deepfake technology. Specifically, the processor 13 uses DeepFaceLab, which is a deepfake open source software for face-swapping, to fill the area 31 with the face image. In this way, the figure in the customized advertisement has the face identical to that of the viewer. In some embodiments, the advertisement may be a video or a short film, and the area (e.g., a blank face) in the video or the short film may be replaced with the face image by using the deepfake technology.

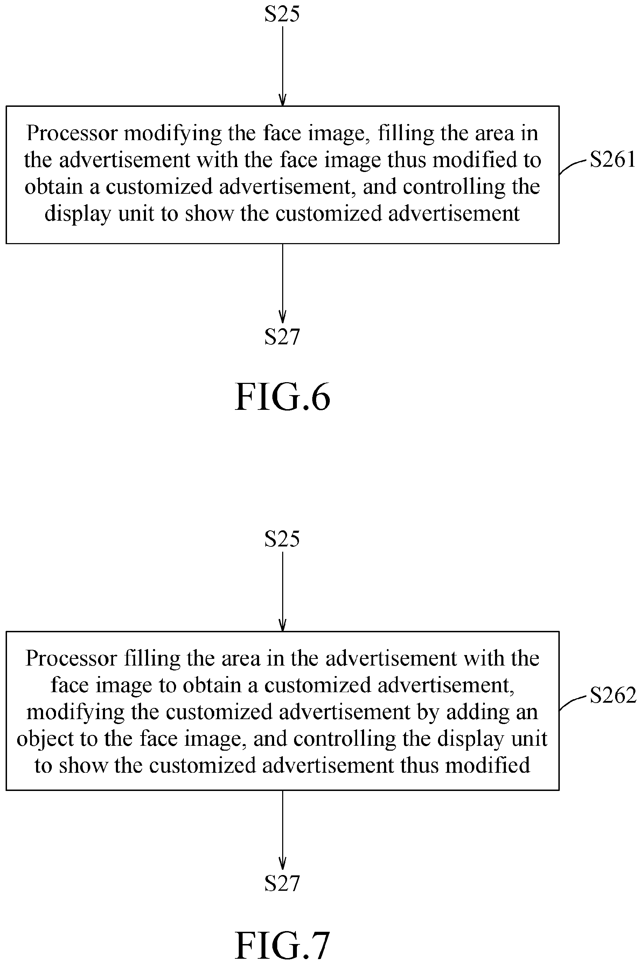

Moreover, in some embodiments, the processor 13 modifies the face image by adding an object to the face image (e.g., adding a headgear), and fills the area 31 in the advertisement with the face image thus modified to result in the customized advertisement (see Figure 6 that illustrates step S261 which is a modification of step S26 of Figure 2). In alternative embodiments, after the customized advertisement is generated, the processor 13 modifies the customized advertisement by adding an object to the face image that has filled the area 31 (see Figure 7 that illustrates step S262 which is a modification of step S26 of Figure 2). Addition of the object can be realized by using the Dlib library for facial landmark detection, and then using the OpenCV library to augment the face image with the object, such as a hat, based on the facial landmarks thus detected.

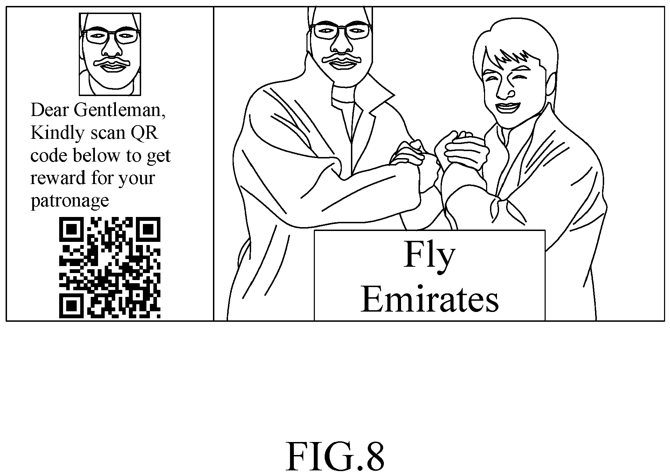

In step S27, the processor 13 controls the display unit 11 to display to the viewer a unique code that can be used to obtain a reward (see Figure 8). In some embodiments, the processor 13 generates a QR code that contains information (e.g., a web address) regarding a reward, such as a tempting offer, a gift, an amount of virtual money, or a discount related to the product or brand being advertised. In this way, the QR code may be scanned by a smartphone of the viewer to enable the smartphone to show details regarding the reward, e.g., a browser software being launched to allow the viewer to access a website that corresponds to the web address and that provides tempting offers, rewards, or discounts related to the product or brand being advertised. As a result, the viewer may be rewarded for participating in the interactive advertisement.

To sum up, the electronic device and the method of customizing an advertisement according to the disclosure at least have the following advantages.

The advertisement can be customized by a face image of a viewer, and the customized advertisement that is made personalized can be displayed to involve the viewer in the advertisement. A tendency of ordinary people being reluctant to connect themselves with a brand can be overcome, and the brand can reach out to more audience to promote the advertising effect.

The advertisement is appealing to the public because a face image therein is captured from a viewer among the public and the face image correctly matches a scenario of the advertisement.

The viewer who agrees to the use of his/her face image in the customized advertisement can be rewarded, and the reward can be related to a product, a service and/or a brand being advertised, further boosting the advertising effect.

An interactive approach of advertising is proposed, which may help boost the sales of electronic devices, such as televisions, monitors, camera modules, video walls, etc., that can be disposed in public or private places. Further, this interactive approach requires more services from advertisement providers (e.g., creating an advertisement that includes a blank face and setting criteria of the advertisement that are used to find the most suitable face image), helping increase income of the advertisement providers.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A method of customizing an advertisement to be implemented by an electronic device (1) that includes a display unit (11), an image capturing unit (12) and a processor (13), the method **characterized by**:
by the display unit (11), displaying an advertisement that contains an area (31) to be filled with an image;
by the image capturing unit (12), capturing a face image of a viewer who is looking at the display unit (11);
by the processor (13), performing a matching algorithm to determine whether the face image is suitable for filling the area (31) in the advertisement;
by the processor (13) after determining that the face image is suitable for filling the area (31) in the advertisement, controlling the display unit (11) to show the face image and a message that requests for consent of the viewer to using the face image in the advertisement; and
by the processor (13), filling the area (31) in the advertisement with the face image to obtain a customized advertisement when it is determined that the viewer has given the consent; and
by the display unit (11), displaying the customized advertisement.

2. The method as claimed in claim 1, further comprising:
by the display unit (11), displaying to the user a unique code that is usable to obtain a reward.

3. The method as claimed in claim 2, wherein in displaying to the user a unique code, the unique code is a barcode that is generated by the processor (13), that contains information regarding the reward, and that is to be scanned by a user device of the viewer.

4. The method as claimed in any one of claims 1 to 3, wherein in performing the matching algorithm, the processor (13) determines whether the face image meets criteria that are set in advance for the advertisement to be customized.

5. The method as claimed in claim 4, wherein the criteria of the advertisement are related to one of an age, a gender, a style, an emotion, and any combination thereof, and the processor (13) detects criteria-related features of the viewer in the face image, calculates an overall score for the criteria-related features thus detected, and compares the overall score with a threshold value so as to decide whether the face image meets the criteria.

6. The method as claimed in any one of claims 1 to 5, wherein
in capturing a face image of a viewer, the processor (13) captures a plurality of face images respectively of multiple viewers who are looking at the display unit (11);
in performing a matching algorithm, the processor (13) performs the matching algorithm to find which one among the face images is the most suitable for fill the area (31).

7. The method as claimed in any one of claims 1 to 6, wherein in capturing a face image of a viewer, the image capturing unit (12) captures images of one or more people in a field of view of the image capturing unit (12), and the processor (13) analyzes the images to determine whether any of the one or more people is looking at the display unit so as to determine whether there is a viewer.

8. The method as claimed in claim 7, wherein when it is determined that there is a viewer, the processor (13) extracts the face image from the image of the viewer.

9. The method as claimed in one of claims 7 and 8, wherein in determining whether there is a viewer, the processor (13) detects one or more faces in the image using a frontal face detector, detects key facial landmarks on the one or more faces by performing facial landmark detection, and detects the eyes based on the key facial landmarks by using an eye detection technique so as to determine whether there is eye contact with the display unit.

10. The method as claimed in any one of claims 1 to 9, wherein in controlling the display unit (11) to show the face image and a message, the message prompts the viewer to make a specific gesture to give consent to using the face image.

11. The method as claimed in claim 10, wherein the processor (13) controls the image capturing unit (12) to capture an image of the viewer, and analyzes the image thus captured to determine whether the viewer is making the specific gesture to give the consent.

12. The method as claimed in any one of claims 1 to 11, wherein in filling the area (31) in the advertisement with the face image, the processor (13) directly overlays the area (31) in the advertisement with the face image to result in the customized advertisement.

13. The method as claimed in any one of claims 1 to 11, wherein in filling the area (31) in the advertisement with the face image, the processor (13) swaps the area (31) with the face image by using the deepfake technology.

14. The method as claimed in any one of claims 1 to 13, prior to filling the area (31) in the advertisement with the face image, further comprising:
by the processor (13), modifying the face image by adding an object to the face image, and filling the area (31) in the advertisement with the face image thus modified to result in the customized advertisement.

15. The method as claimed in any one of claims 1 to 13, subsequent to filling the area (31) in the advertisement with the face image, further comprising:
by the processor (13), modifying the customized advertisement by adding an object to the face image that has filled the area (31).
